# FASCICULE DE BREVET EUROPEEN

(11) **EP 4 424 153 B1**
(45) Date de publication et mention de la délivrance du brevet: **20.05.2026**
(21) Numéro de dépôt: 24160004.8
(22) Date de dépôt: 27.02.2024
(51) Int. Cl.: A01K 73/045

(54) **PANNEAU DE CHALUT**
SCHLEPPNETZPLATTE
TRAWL DOOR

(30) Priorité: 02.03.2023 FR 2301961
(43) Date de publication de la demande: 04.09.2024
(73) Titulaire: Etablissements Morgere, 35540 Miniac Morvan (FR)
(72) Inventeur: REVERSEAU, Pascal, 22100 DINAN (FR)
(74) Mandataire: Regimbeau

(56) Documents cités:
- CN-A- 106 386 717
- CN-A- 112 205 365
- FR-A1- 2 477 373
- FR-A1- 2 852 200

## Description

### DOMAINE TECHNIQUE GENERAL

La présente invention se situe dans le domaine de la pêche en mer et se rapporte plus spécifiquement à un panneau de chalut.

### ETAT DE LA TECHNIQUE

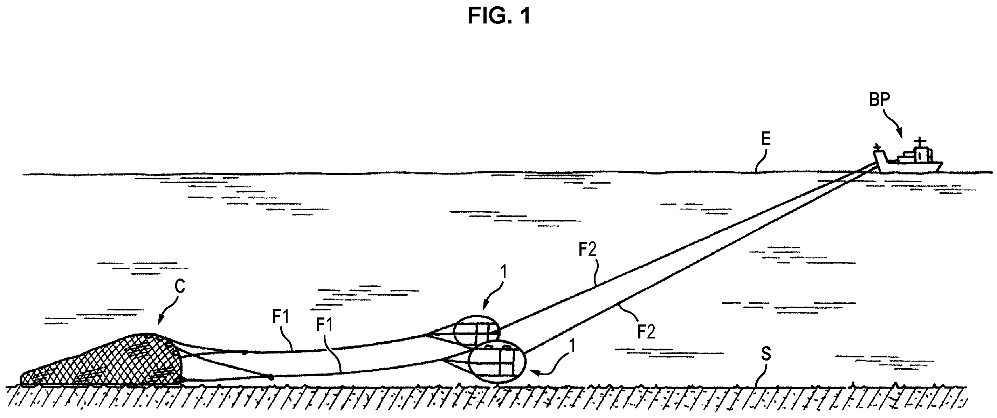

A la figure 1 annexée, on a désigné par la référence BP un bateau de pêche qui navigue à la surface de l'eau E et qui traîne un chalut C. Sur cette figure est représentée une opération de pêche sur le fond marin S. Le chalut C consiste en un filet en forme de poche.

Ce chalut C est relié par des filins (appelés également pattes) F1 à la face dorsale de deux panneaux de chalut 1. Ceux-ci sont représentés de manière purement symbolique dans un seul but d'illustration.

Ces panneaux sont reliés au bateau BP par deux autres filins F2 (appelés également funes).

Le rôle des deux panneaux de chalut 1 est de maintenir la poche convenablement ouverte au cours de la pêche, grâce à l'effet hydrodynamique lié à l'avancement du bateau et au frottement de l'eau contre les faces ventrales des panneaux. Ces panneaux droit et gauche sont similaires mais ont une configuration inverse, symétrique l'une de l'autre.

Différents panneaux de chaluts sont déjà présents sur le marché. Leurs ratios hauteur/largeur sont très différents en fonction des différentes pêches ciblées. Les caractéristiques techniques des panneaux sont définies au travers des coefficients de « lift » (Cl) et de « drag » (Cd).

Le premier coefficient caractérise la puissance d'écartement du panneau et le second sa trainée. L'objectif est d'avoir un ratio Cl/Cd le plus élevé possible.

Une autre caractéristique très importante est la stabilité des panneaux. C'est un élément majeur qui doit subsister quels que soient les conditions météorologiques, les paramètres de pêche (vitesse, longueur de filage, profondeur de pêche, virage, etc.) et de fond marin (fonds durs, sablonneux, vaseux, etc.).

Les panneaux doivent toujours se tenir debout et au même niveau, afin de maintenir l'écartement souhaité et assurer le bon rendement de l'opération de pêche.

A l'heure actuelle et compte-tenu de la législation en vigueur, les temps de pêche et les zones de pêche se réduisent et obligent les pêcheurs à optimiser leur matériel afin de ne pas avoir de temps perdu lors des opérations de pêche.

Améliorer la stabilité des panneaux de chalut contribue à ce meilleur rendement durant l'opération de pêche. En effet, des panneaux qui ne tombent pas, c'est du temps de pêche optimisé.

On comprend aisément que de tels panneaux de chalut occasionnent de fortes turbulences dans l'eau, lesquelles ont un impact négatif sur leur trainée. Bien entendu, ceci a une répercussion immédiate sur la consommation de carburant du navire.

De plus, de telles turbulences ont une influence négative sur le comportement des espèces marines. En effet, elles s'opposent à la capacité des poissons à se diriger vers l'entrée du chalut.

Les documents FR2477373 et CN106386717 illustrant un art antérieur d'intérêt dans le domaine de l'invention.

La présente invention vise donc à pallier les inconvénients détaillés plus haut. En d'autres termes, elle vise à proposer un panneau de chalut stable et dont la trainée est réduite, réduisant ainsi les turbulences précitées ainsi que la consommation de carburant du bateau, tout en assurant une puissance d'écartement importante.

### PRESENTATION DE L'INVENTION

Ces buts sont atteints conformément à l'invention qui se rapporte à un panneau de chalut qui comporte une face dorsale et une face ventrale et qui est délimité par un bord d'attaque et un bord de fuite, ainsi que par un bord supérieur et un bord inférieur généralement convexe, chacun de ces bords supérieur et inférieur étant relié à une extrémité correspondante dudit bord d'attaque , respectivement dudit bord de fuite , ce panneau étant pourvu d'au moins trois nervures parallèles formant saillie sur lesdites faces dorsale et ventrale et comprenant une première nervure médiane qui s'étend dudit bord d'attaque audit bord de fuite, ainsi qu'une deuxième nervure supérieure et une troisième nervure inférieure qui relient la zone de jonction dudit bord d'attaque audit bord supérieur, respectivement audit bord inférieur, à la zone de jonction dudit bord de fuite audit bord supérieur, respectivement audit bord inférieur, ladite deuxième nervure supérieure comprenant, du bord d'attaque au bord de fuite, une partie antérieure et une partie postérieure, caractérisé par le fait que ladite deuxième nervure supérieure, du côté de ladite face dorsale, comporte, dans sa partie antérieure, un rebord libre qui présente un profil convexe et qui se prolonge, dans sa partie postérieure , un rebord libre à profil concave ou par un profil droit, c'est-à-dire rectiligne.

Grâce à ces caractéristiques, on améliore la stabilité du panneau et on constate une réduction des turbulences en bord de fuite du panneau, avec des conséquences favorables sur la réduction de la trainée.

Selon d'autres caractéristiques avantageuses et non limitatives de l'invention, prises seules ou en combinaison :
- ladite troisième nervure inférieure, du côté de ladite face dorsale, présente également, dans sa partie postérieure, un rebord libre à profil concave ou droit ;
- les profils des rebords libres desdites deuxième et troisième nervures sont identiques ;
- ledit rebord libre à profil concave ou droit s'étend sur environ 10 à environ 50% de la longueur totale de ladite nervure ;
- ledit rebord libre à profil concave ou droit est intégré au sein d'une pièce rapportée ou non à ladite nervure ;
- ladite pièce est démontable ou non.

### DESCRIPTION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
La figure 1 est, comme indiqué plus haut, un schéma illustrant une pêche au chalut ;
La figure 2 est une vue de la face dorsale d'un panneau selon l'invention ;
La figure 3 est une vue de la face ventrale du panneau de la figure 1 ;
La figure 4 est une en perspective du panneau des figures précédentes, vu du côté de la face dorsale ;
La figure 5 est une vue de détail de la partie postérieure du panneau des figures précédentes ;
La figure 6 est un schéma destiné à illustrer un mode de réalisation différent d'une nervure du panneau de chalut ;
La figure 7 est un schéma destiné à illustrer encore un autre mode de réalisation différent d'une nervure du panneau de chalut.

### DESCRIPTION DETAILLEE DE L'INVENTION

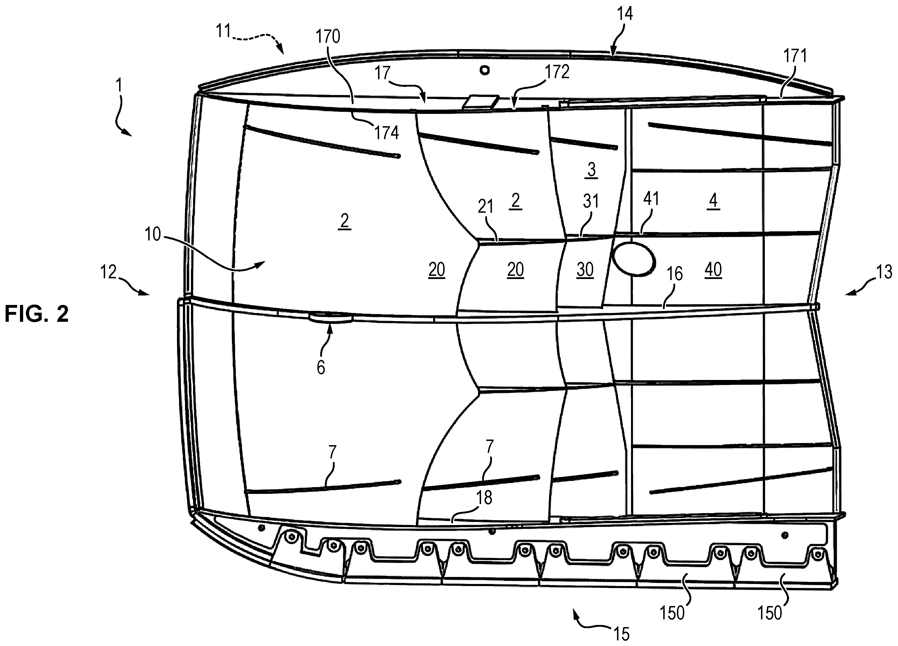

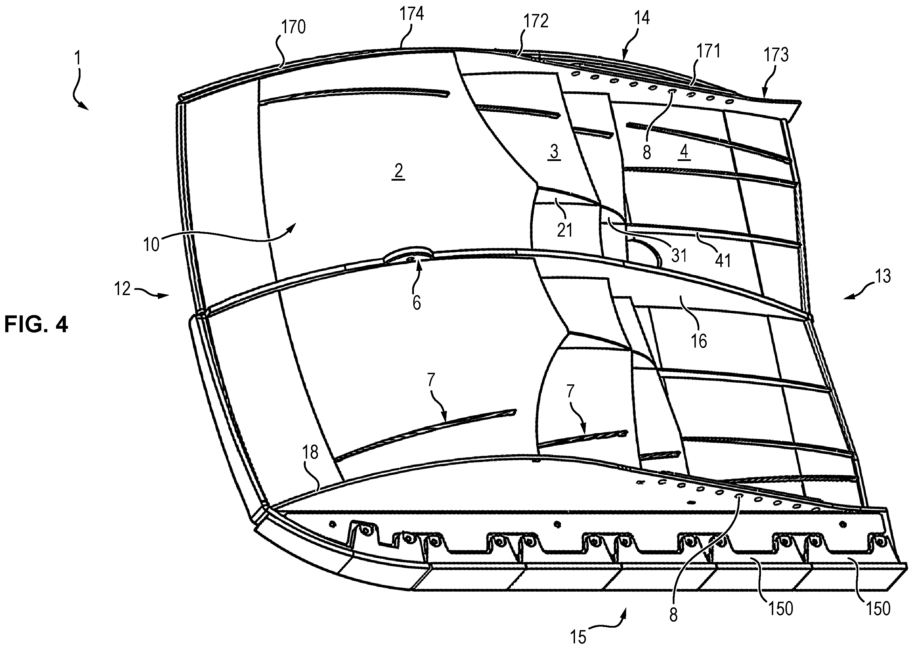

Le panneau de chalut 1 qui est représenté sur les figures 2 à 7, comporte une face 10 dite dorsale et une face opposée 11 dite ventrale.

Il s'inscrit globalement dans un quadrilatère régulier.

Le panneau représenté sur les figures 2 à 5 est un panneau bâbord, conformé pour assurer l'ouverture du chalut C sur son côté gauche lorsqu'il est tracté par un bateau de pêche BP.

Les deux panneaux 1 (figure 1) tractés par le bateau ont une configuration inverse, symétrique l'une de l'autre.

Dans ces conditions, ce qui est décrit ci-après, relativement à un panneau 1, vaut également pour le second.

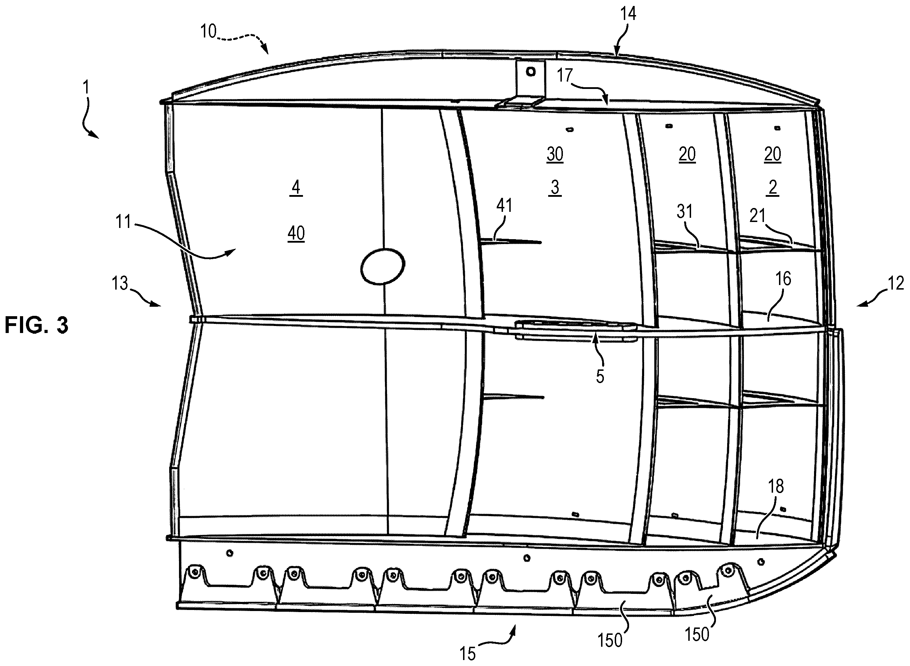

On a désigné sur les figures 2 et 3 le bord avant ou bord d'attaque du panneau 1 par la référence 12, tandis que son bord arrière ou bord de fuite porte la référence 13.

Dans l'exemple de réalisation présenté ici, le bord d'attaque 12 est sensiblement rectiligne. Toutefois, dans une variante non représentée, ce bord attaque pourrait avoir une forme convexe.

Ses bords supérieur et inférieur sont respectivement référencés 14 et 15 et sont courbes (convexes).

Ainsi que cela est bien connu, le bord inférieur 15 est garni d'une série de semelles amovibles adjacentes 150. Il s'agit de patins de glissement au sol qui sont prévus démontables, de sorte qu'ils peuvent être changés lorsqu'ils sont détériorés ou usés.

La forme partie de ce bord inférieur 15 facilite le passage d'obstacles susceptibles de se trouver sur le fond marin, tels que des rochers notamment, limitant ainsi le risque de blocage du panneau 1.

Le bord d'attaque 12 se raccorde aux bords supérieur 14 et inférieur 15 dans des zones de transition opposées et il en est de même pour le bord de fuite 13 vis-à-vis des bords 14 et 15.

Ainsi qu'on peut le voir sur les figures 2 et 3, le panneau 1 est subdivisé dans le sens de sa longueur en trois zones, à savoir une zone antérieure ou avant 2, une zone intermédiaire 3 et une zone postérieure ou arrière 4.

Ces trois zones sont elles-mêmes délimitées, sur la face dorsale 10 par trois nervures longitudinales et horizontales 16,17 et 18. Ces nervures font saillie de part et d'autre des deux faces 10 et 11.

La première nervure 16 est une nervure médiane qui s'étend du bord d'attaque 12 au bord de fuite, à mi-hauteur du panneau 1.

Les deux autres nervures sont constituées d'une deuxième nervure supérieure 17 et d'une troisième nervure inférieure 18. La deuxième nervure supérieure 17 relie la zone de jonction du bord d'attaque 12 au bord supérieur 14 à la zone de jonction du bord supérieur 14 au bord de fuite 13. La troisième nervure inférieure 18 relie la zone de jonction du bord d'attaque 12 au bord inférieur 15 à la zone de jonction du bord inférieur 15 au bord de fuite.

Ces deuxième et troisième nervures sont de longueur sensiblement identique.

A la figure 2, on a référencé 170 la partie antérieure de la deuxième nervure supérieure 17, c'est-à-dire la partie située du côté du bord d'attaque de fuite 12.

De manière similaire, on a référencé 171 la partie postérieure de la deuxième nervure supérieure 17, c'est-à-dire la partie située du côté du bord de fuite 13.

Les parties 2, 3 et 4 sont cintrées et sont fixées aux trois nervures précitées. Leur concavité est dirigée du côté de la face ventrale 11.

Leurs parties antérieures constituent des volets déflecteurs 20, 30 et 40 (également appelées « foils »), de sorte que l'eau de passage en cours d'utilisation peut se faire par des interstices ou fentes prévues entre ces volets. On a référencé 21,31 et 41 les entretoises qui séparent deux à deux ces volets.

Conformément à l'invention et selon un premier mode de réalisation visible aux figures 2, 4 et 5, ladite nervure supérieure 17, du côté de ladite face dorsale 10, présente dans sa partie antérieure 170, un rebord libre 172 à profil convexe 174 qui se prolonge, dans sa partie postérieure 171 par un profil concave 173.

On entend par rebord libre 172, le rebord de la nervure 17 qui est opposé aux faces 10 et 11. Il présente donc, sur l'intégralité de son étendue longitudinale, un profil sinueux, d'abord convexe, puis concave.

Grâce à cette forme en bout de nervure côté bord de fuite, on constate que les turbulences créées par le panneau sont notablement réduites, ce qui a un impact positif sur la trainée et la stabilité du panneau.

Par ailleurs, cela influence les espèces marines à rentrer dans le chalut C. En effet, cela évite que les poissons soient pris dans les turbulences et passent au-dessus de la poche du chalut C.

Il est envisageable mais non obligatoire que la troisième nervure inférieure 18, du côté de la face dorsale 10, présente également un rebord libre similaire à celui décrit ci-dessus. Dans ce cas, cela est favorable pour le brassage des sédiments.

Il est possible mais non obligatoire que les profils des rebords libres des deux nervures 17 et 18 soient identiques.

Selon un mode de réalisation possible, le rebord libre à profil concave s'étend sur environ 10 à environ 60% de la longueur totale de la nervure.

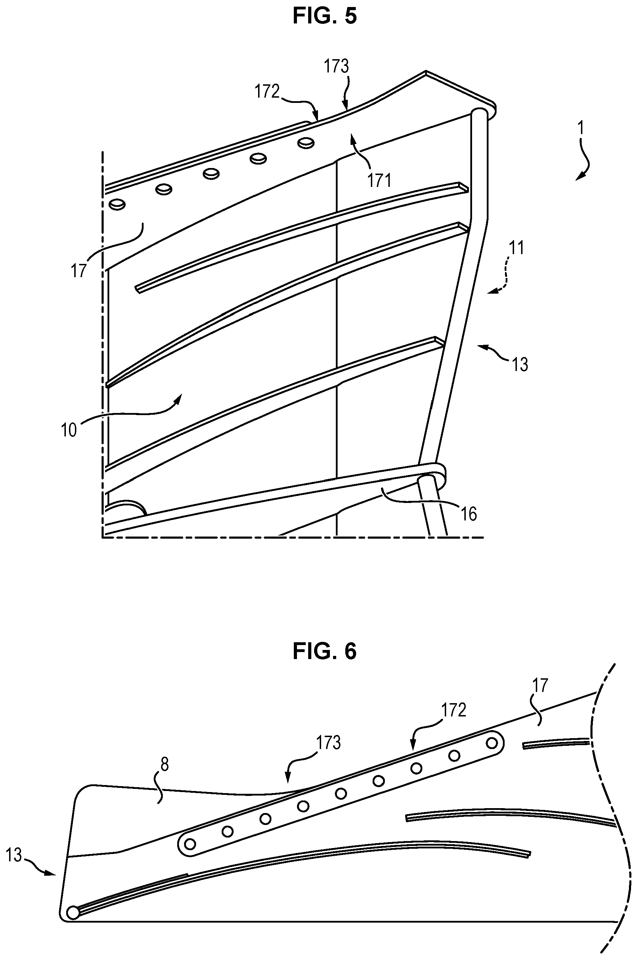

Préférentiellement, la nervure 17 est d'une seule et même pièce. Toutefois, ainsi que le montre la figure 6 où seule est représentée la partie postérieure de la nervure 17, une pièce 8 peut y être rapportée pour constituer avec elle le rebord 170 à profil concave 173.

Il est possible également que la pièce 8 soit démontable, permettant son remplacement en cas d'endommagement.

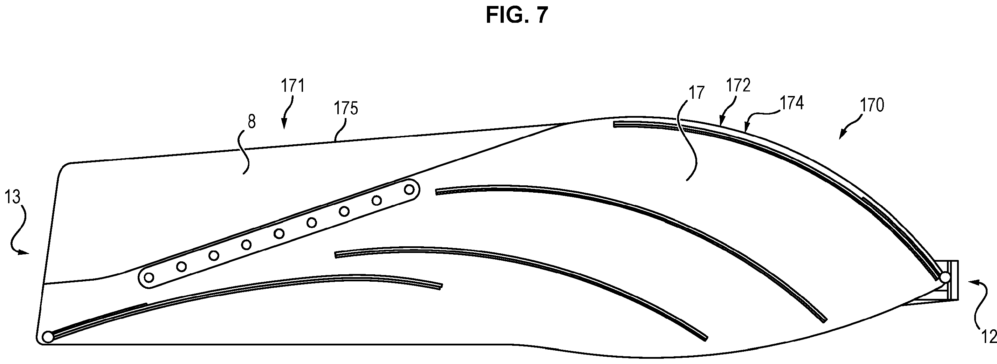

Dans le mode de réalisation de la figure 7 où la vue représentée est similaire à celle de la figure 6, on a toujours affaire à une pièce 8 rapportée à la nervure 17. Toutefois, dans cette configuration, le rebord libre 172, dans la partie postérieure 171 de la nervure 17, a un profil droit 175, c'est-à-dire rectiligne et a une hauteur constante, ce qui signifie qu'il s'étend dans le prolongement du point le plus haut du profil convexe 174 et à la même hauteur ou sensiblement à la même hauteur que celui-ci.

Bien que ce mode de réalisation soit présenté ici sous la forme d'une pièce distincte 8, on peut tout à fait envisager que cette forme particulière de la nervure soit réalisée en une seule et unique pièce.

On notera que des nervures additionnelles 7 sont prévues sur la face dorsale et dont la fonction est de réorienter le flux d'eau vers la partie centrale du panneau.

La face ventrale 11 comporte, à hauteur de l'aube 30, sur la nervure 16, un système 5 permettant d'y attacher la fune. Il comprend deux plaques situées de part et d'autre de la nervure 16, qui sont pourvues d'orifices traversants.

Les nervures supérieure 17 et 18 sont pourvues, sur la face dorsale 10, de série de trous débouchants 8. Ils permettent la fixation de pattes d'attache (non représentées) au chalut C.

La nervure 16 comporte, quant à elle, à hauteur d'un volet 20, une patte 6 pour la fixation d'une troisième patte d'attache au chalut.

Ainsi que cela est visible à la figure 5, le panneau 1, vu en bout, a la forme générale d'un dièdre à angle très ouvert, dont l'ouverture est dirigée du côté de la face ventrale 11. Son arête se situe selon une ligne médiane horizontale matérialisée par la nervure 16.

## Revendications

1. Panneau de chalut (1) qui comporte une face dorsale (10) et une face ventrale (11) et qui est délimité par un bord d'attaque (12) et un bord de fuite (13), ainsi que par un bord supérieur (14) et un bord inférieur (15) généralement convexe, chacun de ces bords supérieur (14) et inférieur (15) étant relié à une extrémité correspondante dudit bord d'attaque (12), respectivement dudit bord de fuite (13), ce panneau (1) étant pourvu d'au moins trois nervures (16,17,18) parallèles formant saillie sur lesdites faces dorsale (10) et ventrale (11) et comprenant une première nervure médiane (16) qui s'étend dudit bord d'attaque (12) audit bord de fuite (13), ainsi qu'une deuxième nervure supérieure (17) et une troisième nervure inférieure (18) ladite deuxième nervure supérieure (17) comprenant, du bord d'attaque (12) au bord de fuite (13), une partie antérieure (170) et une partie postérieure (171),
**caractérisé par le fait que** ladite deuxième nervure supérieure (17), du côté de ladite face dorsale (10), comporte, dans sa partie antérieure (170), un rebord libre (172) qui présente un profil convexe (174) et qui se prolonge, dans sa partie postérieure (171), par un profil concave (173) ou par un profil droit (175), c'est-à-dire rectiligne.

2. Panneau de chalut (1) selon la revendication 1, **caractérisé par le fait que** ladite troisième nervure inférieure (18), du côté de ladite face dorsale (10), présente également, dans sa partie postérieure (171), un rebord libre (172) à profil concave (173) ou droit (175).

3. Panneau de chalut (1) selon la revendication 2, **caractérisé par le fait que** les profils des rebords libres desdites deuxième et troisième nervures (17,18) sont identiques.

4. Panneau de chalut (1) selon l'une des revendications 1 à 3, **caractérisé par le fait que** ledit rebord libre (172) à profil concave (173) ou droit (175) s'étend sur environ 10 à environ 60% de la longueur totale de ladite nervure.

5. Panneau de chalut (1) selon l'une des revendications 1 à 4, **caractérisé par le fait que** ledit rebord libre (172) à profil concave (173) ou droit (175) est intégré au sein d'une pièce (8) rapportée à ladite nervure (17).

6. Panneau de chalut (1) selon la revendication 5, **caractérisé par le fait que** ladite pièce (8) est démontable.

## Patentansprüche

1. Scherbrett (1), das eine Rückseite (10) und eine Vorderseite (11) umfasst und durch eine Vorderkante (12) und eine Hinterkante (13) sowie durch eine Oberkante (14) und eine generell konvexe Unterkante (15) begrenzt ist, wobei jede dieser Ober- (14) und Unterkante (15) mit einem entsprechenden Ende der Vorderkante (12) bzw. der Hinterkante (13) verbunden ist, wobei dieses Brett (1) mit mindestens drei parallelen Rippen (16, 17, 18) versehen ist, die von der Rück-(10) und Vorderseite (11) vorstehen und eine erste mittlere Rippe (16), die sich von der Vorderkante (12) zur Hinterkante (13) erstreckt, sowie eine zweite obere Rippe (17) und eine dritte untere Rippe (18) enthalten, wobei die zweite obere Rippe (17) von der Vorderkante (12) zur Hinterkante (13) einen vorderen Teil (170) und einen hinteren Teil (171) enthält,
**dadurch gekennzeichnet, dass** die zweite obere Rippe (17) auf der Seite der Rückseite (10) im vorderen Teil (170) einen freien Rand (172) umfasst, der ein konvexes Profil (174) aufweist und sich in seinem hinteren Teil (171) in ein konkaves Profil (173) oder in ein gerades, d. h. geradliniges, Profil (175) forsetzt.

2. Scherbrett (1) nach Anspruch 1, **dadurch gekennzeichnet, dass** die dritte untere Rippe (18) auf der Seite der Rückseite (10) in ihrem hinteren Teil (171) auch einen freien Rand (172) mit konkavem (173) oder geradem (175) Profil aufweist.

3. Scherbrett (1) nach Anspruch 2, **dadurch gekennzeichnet, dass** die Profile der freien Ränder der zweiten und der dritten Rippe (17, 18) identisch sind.

4. Scherbrett (1) nach einem der Ansprüche 1 bis 3, **dadurch gekennzeichnet, dass** sich der freie Rand (172) mit konkavem (173) oder geradem Profil (175) über etwa 10 bis etwa 60 % der Gesamtlänge der Rippe erstreckt.

5. Scherbrett (1) nach einem der Ansprüche 1 bis 4, **dadurch gekennzeichnet, dass** der freie Rand (172) mit konkavem (173) oder geradem (175) Profil in ein Teil (8) integriert ist, das an der Rippe (17) angebracht ist.

6. Scherbrett (1) nach Anspruch 5, **dadurch gekennzeichnet, dass** das Teil (8) demontierbar ist.

## Claims

1. A trawl panel (1) comprising a dorsal face (10) and a ventral face (11) and which is defined by a leading edge (12) and a trailing edge (13), as well as by an upper edge (14) and a generally convex lower edge (15), each of these upper (14) and lower (15) edges being connected to a corresponding end of said leading edge (12) and trailing edge (13), respectively, said panel (1) being provided with at least three parallel ribs (16, 17, 18) projecting from said dorsal (10) and ventral (11) surfaces and comprising a first central rib (16) extending from said leading edge (12) to said trailing edge (13), as well as a second upper rib (17) and a third lower rib (18), said second upper rib (17) comprising, from the leading edge (12) to the trailing edge (13), a front portion (170) and a rear portion (171), **characterized in that** said second upper rib (17), on the side of said dorsal face (10), comprises, in its anterior portion (170), a free edge (172) which has a convex profile (174) and which extends, in its rear portion (171), by a concave profile (173) or by a straight profile (175), i.e. a rectilinear profile.

2. The trawl panel (1) according to claim 1, **characterized in that** said third lower rib (18) of the , on the side of said dorsal face (10), also has, in its rear portion (171), a free edge (172) with a concave (173) or straight (175) profile.

3. The trawl panel (1) according to claim 2, **characterized in that** the profiles of the free edges of said second and third ribs (17, 18) are identical.

4. The trawl panel (1) according to one of claims 1 to 3, **characterized in that** said free edge (172) with a concave (173) or straight (175) profile extends over approximately 10% to approximately 60% of the total length of said rib.

5. The trawl panel (1) according to one of claims 1 to 4, **characterized in that** said free edge (172) with a concave (173) or straight (175) profile is integrated within a part (8) attached to said rib (17).

6. The trawl panel (1) according to claim 5, **characterized in that** said part (8) is removable.
